# EUROPEAN PATENT APPLICATION

(11) **EP 4 751 910 A1**
(43) Date of publication of application: **03.06.2026**
(21) Application number: 24845167.6
(22) Date of filing: 22.05.2024
(51) Int. Cl.: B32B 27/32, C08L 23/12, C08L 77/02, C08L 77/06

(54) **MULTILAYER BODY, PACKAGING MATERIAL, AND METHOD FOR PRODUCING PACKAGING MATERIAL**

(30) Priority: 26.07.2023 JP 2023121238
(71) Applicant: MITSUBISHI GAS CHEMICAL COMPANY, INC., Chiyoda-ku Tokyo 100-8324 (JP)
(72) Inventor: OGURO, Hatsuki, Hiratsuka-shi, Kanagawa 254-0016 (JP)
(74) Representative: Vossius & Partner Patentanwälte Rechtsanwälte mbB
(86) International application number: PCT/JP2024/018792
(87) International publication number: WO 2025/022783

(57) **Abstract**

Provided are a multilayer body including a polyolefin resin layer containing a xylylenediamine-based polyamide resin and a barrier layer; a packaging material; and a method for producing a packaging material. A multilayer body includes: a polyolefin resin layer (A) containing an acid-unmodified polyolefin resin as a main component; and a barrier layer (B) containing a barrier resin as a main component. The polyolefin resin layer (A) contains from 0.1 to 8 mass% of a xylylenediamine-based polyamide resin and from 0.1 to 15 mass% of an acid-modified polyolefin resin. The xylylenediamine-based polyamide resin is a polyamide resin containing a diamine-derived structural unit and a dicarboxylic acid-derived structural unit, 70 mol% or more of the diamine-derived structural unit being derived from a xylylenediamine, and 70 mol% or more of the dicarboxylic acid-derived structural unit being derived from an α,ω-linear aliphatic dicarboxylic acid having from 4 to 20 carbon atoms.

## Description

### Technical Field

The present invention relates to a multilayer body, a packaging material, and a method for producing a packaging material. In particular, the present invention relates to a multilayer body or the like using a regrind material.

### Background Art

In recent years, use of regrind materials has been studied to reduce the load on the environment.

The regrind material is a material derived from an end material, a trial product, and a rejected product, which are produced in a plastic molding process. Use of such regrind materials has attracted considerable attention from the viewpoints of considering to the environment such as reduction of waste and effective use of resources (Patent Documents 1 and 2).

### Citation List

### Patent Document

Patent Document 1: JP 2018-135133 A
Patent Document 2: JP 2000-264325 A

### Summary of Invention

### Technical Problem

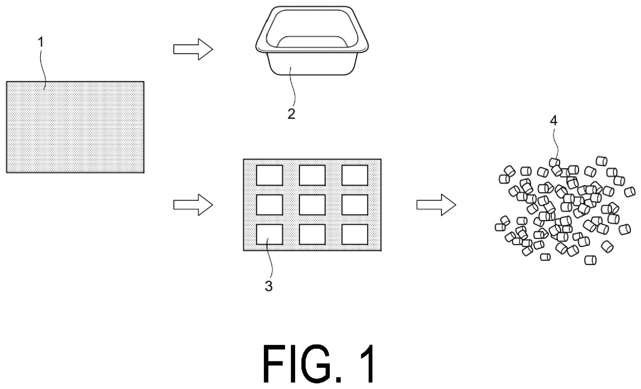

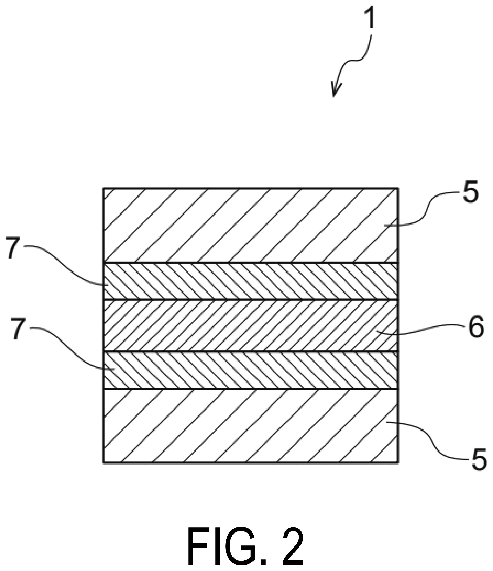

The use of a regrind material will be described in detail with reference to FIG. 1. FIG. 1 is an image diagram illustrating the relationship between plastic molding and a regrind material, in which "1" indicates a raw material, "2" indicates a container molded by processing the raw material, "3" indicates a material after punching the raw material, and "4" indicates a regrind material. In FIG. 1, the scale of the container 2 molded by processing a raw material does not match the scale of the material 3 or the like after the raw material is punched out. Usually, the container 2 and one of the openings of the material 3 after punching correspond to each other. The material 3 after the raw material is punched out is crushed and can be reused as the regrind material 4. In particular, it is desirable that the regrind material 4 can be reused as the raw material 1. However, when the raw material 1 is a multilayer body, it may be difficult to reuse the regrind material. FIG. 2 is a schematic cross-sectional view illustrating an example of a multilayer body, in which 1 indicates a raw material (multilayer body), 5 indicates a polyolefin resin layer, 6 indicates a barrier layer containing a barrier resin, and 7 indicates an adhesive layer containing an adhesive. When the regrind material generated from such a raw material (multilayer body) 1 is blended in the polyolefin resin layer 5, a barrier resin and an adhesive are blended in the polyolefin resin layer 5 in addition to the polyolefin resin. In particular, when the barrier resin is a xylylenediamine-based polyamide resin, the resulting multilayer body or packaging material has poor impact resistance. In addition, the transparency of the multilayer body or the packaging material is poor.

That is, in a multilayer body having a polyolefin resin layer and a barrier layer, being able to provide a multilayer body excellent in impact resistance without degrading transparency even when a xylylenediamine-based polyamide resin is blended in the polyolefin resin layer is required.

An object of the present invention is to solve such an issue. An object of the present invention is to provide a multilayer body including a polyolefin resin layer containing a xylylenediamine-based polyamide resin and a barrier layer, the multilayer body having excellent impact resistance without degrading transparency, a packaging material, and a method for producing a packaging material.

### Solution to Problem

The inventors of the present invention have conducted studies in view of the above-described issues and resultantly found that the above-described issues can be solved by blending an acid-modified polyolefin resin in a polyolefin resin layer containing a xylylenediamine-based polyamide resin.

Specifically, the issues described above have been solved by the following means.
<1> A multilayer body, including:
   a polyolefin resin layer (A) containing an acid-unmodified polyolefin resin as a main component; and a barrier layer (B) containing a barrier resin as a main component,
   the polyolefin resin layer (A) containing from 0.1 to 8 mass% of a xylylenediamine-based polyamide resin and from 0.1 to 15 mass% of an acid-modified polyolefin resin, wherein the xylylenediamine-based polyamide resin is a polyamide resin containing a diamine-derived structural unit and a dicarboxylic acid-derived structural unit, 70 mol% or more of the diamine-derived structural unit being derived from a xylylenediamine, and 70 mol% or more of the dicarboxylic acid-derived structural unit being derived from an α,ω-linear aliphatic dicarboxylic acid having from 4 to 20 carbon atoms.
<2> The multilayer body according to <1>, wherein the acid-unmodified polyolefin resin contained in the polyolefin resin layer (A) contains an acid-unmodified polypropylene resin.
<3> The multilayer body according to <1> or <2>, wherein the acid-modified polyolefin resin contained in the polyolefin resin layer (A) contains a maleic anhydride-modified polypropylene resin.
<4> The multilayer body according to any one of <1> to <3>, wherein the polyolefin resin layer (A) further contains a polyamide resin having a difference in refractive index from the acid-unmodified polyolefin resin of less than 0.08.
<5> The multilayer body according to <4>, wherein the polyamide resin having a difference in refractive index from the acid-unmodified polyolefin resin of less than 0.08 contains at least one selected from polyamide 6, polyamide 66, and polyamide 666.
<6> The multilayer body according to any one of <1> to <5>, wherein the xylylenediamine-based polyamide resin contained in the polyolefin resin layer (A) is a regrind material.
<7> The multilayer body according to any one of <1> to <6>, wherein
   the barrier resin contained in the barrier layer (B) is a xylylenediamine-based polyamide resin, and
   the xylylenediamine-based polyamide resin is a polyamide resin containing a diamine-derived structural unit and a dicarboxylic acid-derived structural unit, 70 mol% or more of the diamine-derived structural unit being derived from a xylylenediamine, and 70 mol% or more of the dicarboxylic acid-derived structural unit being derived from an α,ω-linear aliphatic dicarboxylic acid having from 4 to 20 carbon atoms.
<8> The multilayer body according to any one of <1> to <7>, wherein
   the acid-unmodified polyolefin resin contained in the polyolefin resin layer (A) contains a maleic anhydride-modified polypropylene resin,
   the polyolefin resin layer (A) further contains a polyamide resin having a difference in refractive index from the acid-unmodified polyolefin resin of less than 0.08,
   the polyamide resin having a difference in refractive index from the acid-unmodified polyolefin resin of less than 0.08 contains at least one selected from polyamide 6, polyamide 66, and polyamide 666,
   the xylylenediamine-based polyamide resin contained in the polyolefin resin layer (A) is a regrind material,
   the barrier resin contained in the barrier layer (B) is a xylylenediamine-based polyamide resin, and
   the xylylenediamine-based polyamide resin is a polyamide resin containing a diamine-derived structural unit and a dicarboxylic acid-derived structural unit, 70 mol% or more of the diamine-derived structural unit being derived from a xylylenediamine, and 70 mol% or more of the dicarboxylic acid-derived structural unit being derived from an α,ω-linear aliphatic dicarboxylic acid having from 4 to 20 carbon atoms.
<9> The multilayer body according to any one of <1> to <8>, further including a polyolefin resin layer (C) containing an acid-unmodified polyolefin resin as a main component, wherein the polyolefin resin layer (C), the polyolefin resin layer (A), and the barrier layer (B) are laminated in this order.
<10> A packaging material including the multilayer body described in any one of <1> to <9>.
<11> The packaging material according to <10>, which is for containers.
<12> A method for producing the packaging material described in <10> or <11>, the method including melt-kneading a regrind material generated in producing the packaging material described in <10> or <11> with a virgin acid-unmodified polyolefin resin to produce the polyolefin resin layer (A) containing the acid-unmodified polyolefin resin as a main component.
<13> The method for producing the packaging material according to <12>, wherein in producing the polyolefin resin layer (A), the method includes the melt-kneading of a virgin acid-modified polyolefin resin in addition to the regrind material and the virgin acid-unmodified polyolefin resin.

### Advantageous Effects of Invention

The present invention can provide: a multilayer body including a polyolefin resin layer containing a xylylenediamine-based polyamide resin and a barrier layer, the multilayer body having excellent impact resistance without degrading transparency; a packaging material; and a method for producing a packaging material.

### Brief Description of Drawings

FIG. 1 is an image diagram illustrating the relationship between plastic molding and a grind material.
FIG. 2 is a schematic cross-sectional view illustrating an example of a multilayer body.
FIG. 3 is a schematic cross-sectional view illustrating an example of a multilayer body of the present embodiment.

### Description of Embodiments

Hereinafter, embodiments for carrying out the present invention (hereinafter, simply referred to as "the present embodiment") will be described in detail. The following embodiments are examples for describing the present invention, and the present invention is not limited only to these embodiments.

In the present specification, "from ... to ..." or "of ... to ..." is used to mean that the numerical values described before and after "to" are included as the lower limit value and the upper limit value, respectively.

In the present description, various physical property values and characteristic values are those at 23°C unless otherwise noted.

In the present specification, the number-average molecular weight is a value measured by the following method unless otherwise noted.

The number-average molecular weight (Mn) is determined in terms of a polymethyl methacrylate (PMMA) standard through gel permeation chromatography (GPC) measurement. Two columns, in which a styrene-based polymer is charged as a filler, are used as columns. Hexafluoroisopropanol (HFIP) having a sodium trifluoroacetate concentration of 2 mmol/L is used as a solvent. The measurement is performed at a resin concentration of 0.02 mass%, a column temperature of 40°C, a flow rate of 0.3 mL/min, using a refractive index detector (RI). The calibration curve is measured by dissolving 6 levels of PMMA in HFIP.

In the present specification, the melting point (Tm) is a value measured through differential scanning calorimetry (DSC) in accordance with ISO 11357, unless otherwise noted. A differential scanning calorimeter is used. A resin is placed in a measuring pan of the differential scanning calorimeter, and subjected to a pretreatment of heating to a temperature exceeding the melting point at a heating rate of 10°C/min under a nitrogen atmosphere and then rapidly cooling. Thereafter the measurement is performed. As the measurement conditions, the temperature was increased to 280°C at a temperature increase rate of 10°C/min, and then maintained at 280°C for 5 minutes, after which the temperature is reduced to 100°C at a temperature decrease rate of -5°C/min, and the measurement is then performed to determine the melting point (Tm).

The differential scanning calorimeter used is "DSC-60" available from Shimadzu Corporation.

The term "step" as used herein includes not only an independent step but also a step that cannot be clearly distinguished from other steps as long as an intended action of the step is achieved.

When the measurement methods or the like described in the standards set forth in the present description differ depending on the year, the measurement methods or the like are based on the standards as of January 1, 2023, unless otherwise noted.

In FIGs. 1 to 3, a scale or the like may not be consistent with the actual scale or the like.

A multilayer body of the present embodiment is a multilayer body including a polyolefin resin layer (A) containing an acid-unmodified polyolefin resin as a main component (hereinafter, it may be simply referred to as "polyolefin resin layer (A)") and a barrier layer (B) containing a barrier resin as a main component (hereinafter, it may be simply referred to as "barrier layer (B)"), the polyolefin resin layer (A) containing from 0.1 to 8 mass% of a xylylenediamine-based polyamide resin and from 0.1 to 15 mass% of an acid-modified polyolefin resin, and the xylylenediamine-based polyamide resin is a polyamide resin containing a diamine-derived structural unit and a dicarboxylic acid-derived structural unit, 70 mol% or more of the diamine-derived structural unit being derived from a xylylenediamine, and 70 mol% or more of the dicarboxylic acid-derived structural unit being derived from an α,ω-linear aliphatic dicarboxylic acid having from 4 to 20 carbon atoms. With such a constitution, it is possible to provide a multilayer body having a polyolefin resin layer containing a xylylenediamine-based polyamide resin and a barrier layer and having excellent impact resistance without degrading transparency.

When a regrind material is used for the polyolefin resin layer (A), the polyolefin resin layer (A) may contain a xylylenediamine-based polyamide resin. In such a case, it has been found that the transparency of the multilayer body may deteriorate or the impact resistance may become poor. To solve such an issue, in the present embodiment, an acid-modified polyolefin resin is blended in the polyolefin resin layer (A) containing a xylylenediamine-based polyamide resin. The olefin portion of the acid-modified polyolefin resin enhances compatibility with the acid-unmodified polyolefin resin constituting the polyolefin resin layer (A). In addition, a portion of the acid group of the acid-modified polyolefin resin acts on an amino group at a terminal of the xylylenediamine-based polyamide resin, thereby enhancing compatibility with the xylylenediamine-based polyamide resin. It is presumed that, as a result, the acid-unmodified polyolefin resin and the xylylenediamine-based polyamide resin become compatible with each other, and it becomes possible to provide a multilayer body having excellent impact resistance without degrading transparency.

### Polyolefin Resin Layer (A)

The polyolefin resin layer (A) in the present embodiment contains an acid-unmodified polyolefin resin as a main component, and further contains from 0.1 to 8 mass% of a xylylenediamine-based polyamide resin and from 0.1 to 15 mass% of an acid-modified polyolefin resin.

### Acid-Unmodified Polyolefin Resin

The acid-unmodified polyolefin resin refers to a polyolefin resin having a sufficiently smaller number of acid groups as compared with the acid-modified polyolefin resin described later, and specifically, the amount of the acid groups is 15 mol% or less, preferably 10 mol% or less, more preferably 5 mol% or less, still more preferably 3 mol% or less, further preferably 1 mol% or less of the acid groups contained in the acid-modified polyolefin resin, and the acid-unmodified polyolefin resin further preferably contains no acid groups.

The acid-unmodified polyolefin resin in the present embodiment preferably contains no polar groups other than the acid groups.

The acid-unmodified polyolefin resin in the present embodiment preferably contains a polypropylene resin (acid-unmodified polyolefin resin). Examples of the polypropylene resin in the present embodiment include a homopolymer of propylene and a polyolefin copolymer obtained by copolymerizing less than 50 mass% (preferably 30 mass% or less, more preferably 10 mass% or less, still more preferably 5 mass% or less, particularly preferably 3 mass% or less) of another olefin such as ethylene. A homopolymer of propylene is preferable. In the case of a polyolefin copolymer, the polyolefin copolymer may be a block polymer or a random polymer.

The melting point of the acid-unmodified polyolefin resin is preferably 120°C or higher, more preferably 130°C or higher. When it is equal to or higher than the lower limit value, the moldability tends to improve. The melting point of the acid-unmodified polyolefin resin is preferably 180°C or lower, more preferably 170°C or lower. When it is equal to or lower than the upper limit value, the moldability tends to improve.

When the polyolefin resin layer in the present embodiment contains two or more acid-unmodified polyolefin resins, the melting point is the melting point of the acid-unmodified polyolefin resin having the highest content.

The acid-unmodified polyolefin resin used in the present embodiment preferably has a melt flow rate of 1 g/10 min or more as measured under conditions of 230°C and 2.16 kgf in accordance with JIS K 7210-1:2014. In the present embodiment, the moldability can be improved by setting the MFR of the acid-unmodified polyolefin resin to be equal to or more than the lower limit value. The MFR of the acid-unmodified polyolefin resin is preferably 0.5 g/10 min or more. The MFR of the acid-unmodified polyolefin resin is preferably 4.0 g/10 min or less, more preferably 3.0 g/10 min or less, still more preferably 2.0 g/10 min or less, further preferably 1.8 g/10 min or less. Setting the MFR to be in the ranges tends to result in improved moldability.

The refractive index of the acid-unmodified polyolefin resin is, for example, 1.40 or more, for example, it is less than 1.52, or 1.51 or less, or it may be 1.50 or less.

The refractive index is measured according to JIS K 0062:1992.

When the polyolefin resin layer (A) in the present embodiment contains two or more acid-unmodified polyolefin resins, the refractive index of the acid-unmodified polyolefin resin is the refractive index of a mixture of the two or more acid-unmodified polyolefin resins.

The polyolefin resin layer (A) in the present embodiment contains an acid-unmodified polyolefin resin as a main component. The main component means a component having the highest content among the components contained in the polyolefin resin layer (A) (hereinafter, for "main component", the same applies).

The content of the acid-unmodified polyolefin resin in the polyolefin resin layer (A) is preferably 50 mass% or more, more preferably 60 mass% or more, still more preferably 65 mass% or more, further preferably 70 mass% or more, still further preferably 75 mass% or more, with respect to 100 mass% of the polyolefin resin layer (A). When it is equal to or more than the lower limit value, degradation of transparency tends to be suppressed. The upper limit value of the content of the acid-unmodified polyolefin resin in the polyolefin resin layer (A) is preferably an amount in which all the components other than the xylylenediamine-based polyamide resin or the acid-modified polyolefin resin are polyolefin resins.

The polyolefin resin layer (A) may contain only one acid-unmodified polyolefin resin or two or more acid-unmodified polyolefin resins. When two or more are contained, the total amount is preferably in the range described above.

### Xylylenediamine-Based Polyamide Resin

The polyolefin resin layer (A) in the present embodiment contains a xylylenediamine-based polyamide resin containing a diamine-derived structural unit and a dicarboxylic acid-derived structural unit, wherein 70 mol% or more of the diamine-derived structural unit is derived from a xylylenediamine, and 70 mol% or more of the dicarboxylic acid-derived structural unit is derived from an α,ω-linear aliphatic dicarboxylic acid having from 4 to 20 carbon atoms.

In the xylylenediamine-based polyamide resin, 70 mol% or more, preferably 80 mol% or more, more preferably 90 mol% or more, still more preferably 95 mol% or more, further preferably 99 mol% or more of the diamine-derived structural unit is derived from a xylylenediamine. The xylylenediamine is preferably m-xylylenediamine and p-xylylenediamine, more preferably m-xylylenediamine.

An example of a preferable embodiment of the xylylenediamine-based polyamide resin in the present embodiment is a xylylenediamine-based polyamide resin in which 70 mol% or more (preferably 80 mol% or more, more preferably 90 mol% or more, still more preferably 95 mol% or more, further preferably 99 mol% or more) of the diamine-derived structural unit is derived from m-xylylenediamine.

Examples of the diamine other than xylylenediamine include aromatic diamines such as p-phenylenediamine, and aliphatic diamines, such as 1,3-bis(aminomethyl)cyclohexane, 1,4-bis(aminomethyl)cyclohexane, tetramethylene diamine, pentamethylene diamine, hexamethylene diamine, octamethylene diamine, and nonamethylene diamine. One of these diamines other than xylylenediamine may be used, or two or more of these may be used.

When a diamine other than xylylenediamine is used as the diamine component, the diamine thereof is used at a proportion of preferably 30 mol% or less, more preferably from 1 to 25 mol%, particularly preferably from 5 to 20 mol%, of the diamine-derived structural unit.

In the present embodiment, as described above, 70 mol% or more of the dicarboxylic acid-derived structural unit in the xylylenediamine-based polyamide resin is derived from a polyamide resin derived from an α,ω-linear aliphatic dicarboxylic acid having from 4 to 20 carbon atoms.

The lower limit value of the proportion of the α,ω-linear aliphatic dicarboxylic acid having from 4 to 20 carbon atoms (preferably an α,ω-linear aliphatic dicarboxylic acid having from 4 to 8 carbon atoms, more preferably adipic acid) among all the dicarboxylic acids constituting the dicarboxylic acid-derived structural unit in the xylylenediamine-based polyamide resin is 70 mol% or more, preferably 75 mol% or more, more preferably 80 mol% or more, still more preferably 85 mol% or more, further preferably 90 mol% or more, and it may be 95 mol% or more, or 99 mol% or more. The upper limit value of the proportion of the α,ω-linear aliphatic dicarboxylic acid having from 4 to 20 carbon atoms is 100 mol% or less.

As described above, the α,ω-linear aliphatic dicarboxylic acid having from 4 to 20 carbon atoms is preferably an α,ω-linear aliphatic dicarboxylic acid having from 4 to 8 carbon atoms.

Examples of the α,ω-linear aliphatic dicarboxylic acid having from 4 to 20 carbon atoms that is preferably used as the raw material dicarboxylic acid component of the polyamide resin include aliphatic dicarboxylic acids, such as succinic acid, glutaric acid, pimelic acid, suberic acid, azelaic acid, adipic acid, sebacic acid, undecanedioic acid, and dodecanedioic acid. One of these aliphatic dicarboxylic acids can be used, or two or more of these can be mixed and used. Among these, adipic acid is preferable because the melting point of the polyamide resin is within an appropriate range for molding.

Examples of dicarboxylic acid other than and the α,ω-linear aliphatic dicarboxylic acid having from 4 to 20 carbon atoms include a phthalic acid compounds, such as isophthalic acid, terephthalic acid, and ortho-phthalic acid; and naphthalenedicarboxylic acids, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these can be used, or two or more of these can be mixed and used.

The xylylenediamine-based polyamide resin preferably is substantially free of terephthalic acid-derived structural units. The phrase "substantially free of" refers to 5 mol% or less, preferably 3 mol% or less, still more preferably 1 mol% or less, further preferably 0 mol% of the mole amount of isophthalic acid contained in the xylylenediamine-based polyamide resin. With such a constitution, moderate molding processability is maintained, and the gas barrier property is more hardly changed by humidity.

The xylylenediamine-based polyamide resin used in the present embodiment contains a dicarboxylic acid-derived structural unit and a diamine-derived structural unit as main components, but it may also contain structural units other than the dicarboxylic acid-derived structural unit or the diamine-derived structural unit, or may also contain additional moieties such as terminal groups. Examples of additional structural units include, but are not limited to, structural units derived from, for example, a lactam such as ε-caprolactam, valerolactam, laurolactam, and undecalactam, or from an aminocarboxylic acid such as 11-aminoundecanoic acid and 12-aminododecanoic acid. Further, the xylylenediamine-based polyamide resin used in the present embodiment contains trace components such as additives used for synthesis. Usually, 95 mass% or more, preferably 98 mass% or more of the xylylenediamine-based polyamide resin used in the present embodiment is the dicarboxylic acid-derived structural unit or the diamine-derived structural unit.

The melting point of the xylylenediamine-based polyamide resin is preferably 150°C or more, more preferably 180°C or more, still more preferably 200°C or more, further preferably 220°C or more, and is preferably 350°C or less, more preferably 330°C or less, still more preferably 310°C or less, further preferably 290°C or less.

The lower limit of a number-average molecular weight (Mn) of the xylylenediamine-based polyamide resin is preferably 6000 or more, more preferably 8000 or more, still more preferably 10000 or more, and is preferably 35000 or less, more preferably 30000 or more, still more preferably 25000 or less, further preferably 20000 or less.

The refractive index of the xylylenediamine-based polyamide resin is, for example, 1.55 or more, further 1.56 or more, and may be more than 1.56, and it is, for example, less than 1.59, or 1.58 or less, and it may be less than 1.58.

The refractive index is measured according to JIS K 0062:1992.

When the polyolefin resin layer (A) in the present embodiment contains two or more xylylenediamine-based polyamide resins, the refractive index of the xylylenediamine-based polyamide resin is the refractive index of a mixture of the two or more xylylenediamine-based polyamide resins.

The xylylenediamine-based polyamide resin preferably uses a polyamide resin (biomass polyamide resin) produced by using a biomass raw material. Use of a biomass polyamide resin can reduce environmental load.

In the xylylenediamine-based polyamide resin, a bioadipic acid can be used as a biomass raw material. Adipic acid that has been mass balance certified (ISCC PLUS) can also be used. The mass balance certification means that degrees of usage of reusable raw materials and raw biomaterials for each factory or production facility and degrees of production and shipment of products are quantified and certified together with quality.

A xylylenediamine-based polyamide resin using a plant-derived dicarboxylic acid such as sebacic acid is also suitable as a biomass polyamide resin.

The content of the xylylenediamine-based polyamide resin in the polyolefin resin layer (A) is 0.1 mass% or more, preferably 0.5 mass% or more, more preferably 1 mass% or more, still more preferably 2 mass% or more, further preferably 3 mass% or more, still further preferably 3.5 mass% or more, in 100 mass% of the polyolefin resin layer (A). The upper limit value of the content of the xylylenediamine-based polyamide resin is 8 mass% or less, preferably 7 mass% or less, more preferably 6 mass% or less, in 100 mass% of the polyolefin resin layer (A). When it is equal to or lower than the upper limit value, degradation of physical properties tends to be suppressed.

The polyolefin resin layer (A) in the present embodiment may contain only one xylylenediamine-based polyamide resin or two or more xylylenediamine-based polyamide resins. When two or more are contained, the total amount is preferably in the range described above.

The xylylenediamine-based polyamide resin in the polyolefin resin layer (A) is preferably 10 parts by mass or less, more preferably 9 parts by mass or less, still more preferably less than 8 parts by mass, further preferably 6 parts by mass or less, may be 5 parts by mass or less, and is preferably 2 parts by mass or more with respect to 100 parts by mass of the polyolefin resin contained in the polyolefin resin layer (A).

### Acid-Modified Polyolefin Resin

The polyolefin resin layer (A) in the present embodiment contains an acid-modified polyolefin resin. By containing the acid-modified polyolefin resin, compatibility between the acid-unmodified polyolefin resin and the xylylenediamine-based polyamide resin can be improved, and degradation in impact resistance can be more effectively suppressed while degradation in transparency of the resulting polyolefin resin layer (A) is suppressed.

The polyolefin resin constituting the acid-modified polyolefin resin in the present embodiment preferably contains a polypropylene resin. Examples of the polypropylene resin in the present embodiment include a homopolymer of propylene and a polyolefin copolymer obtained by copolymerizing less than 50 mass% (preferably 30 mass% or less, more preferably 10 mass% or less, still more preferably 5 mass% or less, particularly preferably 3 mass% or less) of another olefin such as ethylene. A homopolymer of propylene is preferable. In the case of a polyolefin copolymer, the polyolefin copolymer may be a block polymer or a random polymer.

Preferable examples of a compound capable of acid-modifying a polyolefin resin include acrylic acid, methacrylic acid, maleic acid, fumaric acid, itaconic acid, crotonic acid, methylmaleic acid, methylfumaric acid, mesaconic acid, citraconic acid, glutaconic acid, cis-4-cyclohexene-1,2-dicarboxylic acid, endobicyclo[2.2.1]-5-heptene-2,3-dicarboxylic acid, and metal salts of these carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2,3-dicarboxylic acid anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. One of these can be used, or two or more of these can be used in combination. Among these, maleic anhydride is preferable.

In the present embodiment, as the acid-modified polyolefin resin, an acid-modified polypropylene resin is particularly preferably used, and a maleic anhydride-modified polypropylene resin is more preferably used.

The melting point of the acid-modified polyolefin resin is preferably 50°C or higher, more preferably 60°C or higher. When it is equal to or higher than the lower limit value, the moldability tends to improve. The melting point of the acid-modified polyolefin resin is preferably 180°C or less, more preferably 170°C or less. When it is equal to or lower than the upper limit value, the moldability tends to improve.

When the polyolefin resin layer in the present embodiment contains two or more acid-modified polyolefin resins, the melting point is the melting point of the acid-unmodified polyolefin resin having the highest content.

In the acid-modified polyolefin resin used in the present embodiment, the MFR measured at 230°C and 2.16 kgf in accordance with JIS K 7210-1:2014 is preferably larger than the MFR of the acid-unmodified polyolefin resin. It is presumed that such a constitution makes the acid-modified polyolefin resin easily compatible with the acid-unmodified polyolefin resin. It is presumed that, as a result, the contact point between the acid-modified polyolefin resin in the polyolefin resin layer and the polyamide resin layer increases, and the proportion of the covalent bond between the acid group of the acid-modified polyolefin resin and the amino group of the xylylenediamine-based polyamide resin increases.

The MFR of the acid-modified polyolefin resin measured under the conditions of a temperature of 190°C and 2.16 kgf in accordance with JIS K 7210-1:2014 is preferably 1 g/10 min or more, more preferably 10 g/10 min or more, still more preferably 50 g/10 min or more, further preferably 100 g/10 min or more, still further preferably 200 g/10 min or more, yet still further preferably 300 g/10 min or more, and particularly preferably 400 g/10 min or more. When it is equal to or more than the lower limit value, the compatibility with the acid-unmodified polyolefin resin tends to further improve. The MFR of the acid-modified polyolefin resin is preferably 500 g/10 minutes or less. When it is equal to or less than the upper limit value, the overall fluidity does not excessively increase, which tends to result in favorable moldability.

The content of the acid-modified polyolefin resin in the polyolefin resin layer (A) is from 0.1 to 15 mass%, preferably 0.5 mass% or more, more preferably 1 mass% or more, still more preferably 3 mass% or more, further preferably 4 mass% or more, still further preferably 5 mass% or more, yet still further preferably 7 mass% or more, particularly preferably 8 mass% or more, with respect to 100 mass% of the polyolefin resin layer (A). When it is equal to or more than the lower limit value, delamination tends to be suppressed. The upper limit value of the content of the acid-modified polyolefin resin in the polyolefin resin layer (A) is preferably 20 mass% or less, more preferably 15 mass% or less, still more preferably 10 mass% or less, and depending on the application and the like, it may be less than 5 mass%, with respect to 100 mass% of the polyolefin resin layer (A). When it is equal to or less than the upper limit value, degradation of transparency tends to be suppressed.

The polyolefin resin layer (A) may contain only one acid-modified polyolefin resin or two or more acid-modified polyolefin resins. When two or more are contained, the total amount is preferably in the range described above.

### Polyamide Resin Having Refractive Index Difference of Less Than 0.08 From Acid-Unmodified Polyolefin Resin

In the present embodiment, the polyolefin resin layer (A) preferably further contains a polyamide resin (hereinafter, may be referred to as "additional polyamide resin") having a difference in refractive index from the acid-unmodified polyolefin resin of less than 0.08.

Inclusion of such an additional polyamide resin can further improve the transparency of the resulting multilayer body.

The type and the like of the additional polyamide resin are not particularly limited as long as the difference in refractive index from the acid-unmodified polyolefin resin is less than 0.08, and a known polyamide resin can be widely used. The difference in refractive index may be any value as long as the absolute value satisfies the upper range, but usually, the refractive index of the acid-unmodified polyolefin resin ≤ the refractive index of the additional polyamide resin is satisfied. The difference in refractive index is preferably 0.07 or less, more preferably 0.06 or less, still more preferably less than 0.06. When it is equal to or less than the upper limit value, degradation of the transparency tends to be effectively suppressed. The lower limit of the refractive index difference is preferably 0, and it may be more than 0.

The refractive index is measured according to JIS K 0062:1992.

When the polyolefin resin layer (A) in the present embodiment contains two or more additional polyamide resins, the refractive index of the additional polyamide resin is the refractive index of a mixture of the two or more additional polyamide resins.

As a specific example of the additional polyamide resin, an aliphatic polyamide resin or a semi-aromatic polyamide resin may be used, and an aliphatic polyamide resin is preferable.

The aliphatic polyamide resin preferably contains at least one selected from polyamide 6, polyamide 66, and polyamide 666.

Examples of the semi-aromatic polyamide resin include xylylenediamine-based polyamide resins modified with isophthalic acid (polyamide resins in which more than 30 mol% of the dicarboxylic acid-derived structural unit is derived from isophthalic acid).

When the polyolefin resin layer (A) in the present embodiment contains an additional polyamide resin, the content thereof is preferably 0.01 mass% or more, more preferably 0.05 mass% or more, still more preferably 0.1 mass% or more, further preferably 0.3 mass% or more, still further preferably 0.4 mass% or more, with respect to 100 mass% of the polyolefin resin layer (A). The upper limit value of the content of the additional polyamide resin is preferably 5 mass% or less, more preferably 4.5 mass% or less, still more preferably 4 mass% or less, further preferably 3 mass% or less, still further preferably 2 mass% or less, with respect to 100 mass% of the polyolefin resin layer (A). When it is equal to or less than the upper limit value, degradation of physical properties tends to be effectively suppressed.

The resin composition of the present embodiment may contain only one additional polyamide resin or may contain two or more additional polyamide resins. When two or more are contained, the total amount is preferably in the range described above.

### Additional Component

The polyolefin resin layer (A) in the present embodiment may contain an additional component other than those described above without departing from the spirit of the present invention.

The additional component that may be contained include thermoplastic resins other than the polyolefin resin or the polyamide resin, inorganic fillers such as glass fibers and carbon fibers; plate-shaped inorganic fillers such as glass flakes, talc, kaolin, mica, montmorillonite, and organo-modified clay; impact resistance modifiers such as various elastomers; crystal nucleating agents; lubricants such as fatty acid amide-based compounds and fatty acid amide-based compounds; antioxidants such as copper compounds, organic or inorganic halogen-based compounds, hindered phenol-based compounds, hindered amine-based compounds, hydrazine-based compounds, sulfur-based compounds, and phosphorus-based compounds; coloring inhibitors; UV absorbers such as benzotriazole-based UV absorbers; additives such as mold release agents, plasticizers, colorants, and flame retardants; and additives such as oxidation reaction accelerators, recycling aids, and compounds containing benzoquinones, anthraquinones, or naphthoquinones. The total content of these additional components is preferably 10 mass% or less, more preferably 5 mass% or less, still more preferably 3 mass% or less, and it may be 1 mass% or less.

For the oxidation reaction accelerators, reference can be made to the descriptions in paragraphs [0034] to [0036] of WO 2019/058986, the contents of which are incorporated herein by reference.

### Regrind Material

The polyolefin resin layer (A) in the present embodiment may be formed of only a virgin material, or may contain a regrind material or a recycled material, and preferably contains a regrind material. Here, the virgin material means a material that has not been subjected to any processing, unlike a regrind material or a recycled material. Usually, various molded articles are produced from such a virgin material.

Examples of the regrind material include a regrind material of a multilayer body having a polyolefin resin layer/xylylenediamine-based polyamide resin layer/polyolefin resin layer, and the multilayer body of the present embodiment is preferable.

That is, the xylylenediamine-based polyamide resin contained in the polyolefin resin layer (A) in the present embodiment is preferably a regrind material. In the present embodiment, it is preferable that 90 mass% or more and 100 mass% or less of the xylylenediamine-based polyamide resin contained in the polyolefin resin layer (A) is a regrind material.

A part of the acid-unmodified polyolefin resin contained in the polyolefin resin layer (A) in the present embodiment is preferably a regrind material.

In the present embodiment, the proportion of the regrind material in the acid-unmodified polyolefin resin contained in the polyolefin resin layer (A) is preferably 5 mass% or more, more preferably 10) mass% or more, still more preferably 30 mass% or more, further preferably 50 mass% or more, still further preferably 70 mass% or more. When it is equal to or more than the lower limit value, resources can be effectively utilized from the viewpoints of considering to the environment. The proportion of the regrind material in the acid-unmodified polyolefin resin contained in the polyolefin resin layer (A) is preferably 100 mass% or less.

A part of the acid-modified polyolefin resin contained in the polyolefin resin layer (A) in the present embodiment is preferably a regrind material.

In the present embodiment, the proportion of the regrind material in the acid-modified polyolefin resin contained in the polyolefin resin layer (A) is preferably 5 mass% or more, more preferably 10 mass% or more, further preferably 30 mass% or more, still further preferably 50 mass% or more. The proportion of the regrind material in the acid-modified polyolefin resin contained in the polyolefin resin layer (A) is preferably 90 mass% or less, more preferably 70 mass% or less, still more preferably 60 mass% or less. When it is equal to or less than the upper limit value, degradation of physical properties tends to be effectively suppressed.

A part or all of the additional polyamide resin contained in the polyolefin resin layer (A) in the present embodiment may be a regrind material.

In the present embodiment, the proportion of the regrind material in the additional polyamide resin contained in the polyolefin resin layer (A) is preferably 90 mass% or more and 100 mass% or less.

The thickness of the polyolefin resin layer (A) is preferably 10 µm or more, more preferably 20 µm or more, still more preferably 50 µm or more, and is preferably 2000 µm or less, still more preferably 1000 µm or less.

### <Barrier Layer (B)>

The multilayer body of the present embodiment includes a barrier layer (B) containing a barrier resin as a main component.

The barrier resin is not particularly limited as long as it is excellent in oxygen barrier properties. Specifically, the oxygen permeability coefficient is preferably 0.1 cc·mm/(m²·day·atm) or less, more preferably 0.08 cc·mm/(m²·day·atm) or less, still more preferably 0.06 cc·mm/(m²·day·atm) or less. The lower limit value is ideally 0 cc·mm/(m²·day·atm), but is practically 0.001 cc·mm/(m²·day·atm) or more.

The oxygen permeability coefficient is defined as oxygen transmission rate (OTR) under an atmosphere at 23°C and relative humidity (60%RH) in accordance with ASTM D3985 with a film molded to have a thickness of 50 µm and using an oxygen transmission coefficient measuring apparatus. The unit pressure of OTR was 1 atm, and the unit transmission time was 24 hours.

The oxygen transmission rate (OTR) is measured using an oxygen transmission rate measuring device (product name: "OX-TRAN (trade name) 2/21", available from MOCON Inc.).

Examples of the barrier resin include an ethylene-vinyl alcohol copolymer and a xylylenediamine-based polyamide resin. A xylylenediamine-based polyamide resin is preferable.

For specific examples of the ethylene-vinyl alcohol copolymer, reference can be made to the description in paragraphs [0021] to [0040] of JP 2023-058469 A, the description in JP 2023-023159 A, and the description in paragraphs [0011] to [0016] of JP 2022-074211 A, the contents of which are incorporated herein by reference.

The xylylenediamine-based polyamide resin has the same meaning as the xylylenediamine-based polyamide resin described in the section of the polyolefin resin layer (A), and the preferable range thereof is also the same. In particular, in the present embodiment, the composition of 90 mass% or more of the xylylenediamine-based polyamide resin contained in the polyolefin resin layer (A) and the xylylenediamine-based polyamide resin contained in the barrier layer (B) is preferably the same.

The barrier layer (B) in the present embodiment contains a barrier resin as a main component. The main component means a component having the highest content among the components contained in the barrier layer (B).

The content of the barrier resin in the barrier layer (B) is preferably 70 mass% or more, more preferably 80 mass% or more, still more preferably 85 mass% or more, further preferably 90 mass% or more, still further preferably 95 mass% or more, with respect to 100 mass% of the barrier layer (B). When it is equal to or more than the lower limit value, the barrier properties tend to further improve. The upper limit value of the content of the barrier resin in the barrier layer (B) is 100 mass% or less.

The barrier layer (B) may contain only one barrier resin, or may contain two or more barrier resins. When two or more are contained, the total amount is preferably in the range described above.

The thickness of the barrier layer (B) is preferably 1 µm or more, more preferably 5 µm or more, still more preferably 10 µm or more, and is preferably 400 µm or less, more preferably 300 µm or less, still more preferably 150 µm or less.

### Additional Component

The barrier layer (B) in the present embodiment may contain an additional component other than the components described above without departing from the gist of the present invention.

Examples of the additional component that may be contained include thermoplastic resins other than the barrier resin, inorganic fillers such as glass fibers and carbon fibers; plate-shaped inorganic fillers such as glass flakes, talc, kaolin, mica, montmorillonite, and organo-modified clay; impact resistance modifiers such as various elastomers; crystal nucleating agents; lubricants such as fatty acid amide-based compounds and fatty acid amide-based compounds; antioxidants such as copper compounds, organic or inorganic halogen-based compounds, hindered phenol-based compounds, hindered amine-based compounds, hydrazine-based compounds, sulfur-based compounds, and phosphorus-based compounds; coloring inhibitors; UV absorbers such as benzotriazole-based UV absorbers; additives such as mold release agents, plasticizers, colorants, and flame retardants; and additives such as oxidation reaction accelerators, recycling aids, and additives such as compounds containing benzoquinones, anthraquinones, or naphthoquinones. The total content of these additional components is preferably 10 mass% or less, more preferably 5 mass% or less, still more preferably 3 mass% or less, and it may be 1 mass% or less.

For the oxidation reaction accelerators, reference can be made to the descriptions in paragraphs [0034] to [0036] of WO 2019/058986, the contents of which are incorporated herein by reference.

### Layer Constitution of Multilayer Body

As described above, the multilayer body of the present embodiment includes the polyolefin resin layer (A) and the barrier layer (B). When the multilayer body of the present embodiment is formed into a container (multilayer container), the polyolefin resin layer (A) is usually on the outer side. The container (multilayer container) generally has a layer constitution of polyolefin resin layer (A)/barrier layer (B)/polyolefin resin layer (A).

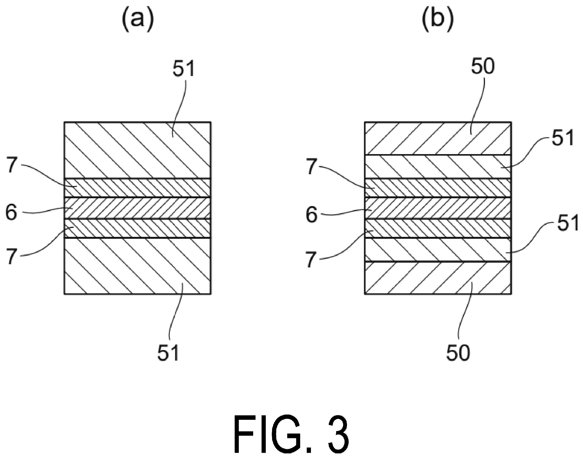

Hereinafter, variations of the layer constitution of the multilayer body of the present embodiment will be described with reference to FIG. 3. In FIG. 3, the same members as those in FIGS. 1 and 2 are denoted by the same reference numerals.

A first embodiment of the multilayer body of the present embodiment is a multilayer body in which the polyolefin resin layer (A) contains a regrind material.

FIG. 3(a) is an example of the first embodiment of the multilayer body, and a reference numeral 51 denotes the polyolefin resin layer (A) containing a regrind material. In FIG. 3(a), the multilayer body has a layer constitution of polyolefin resin layer (A) 51/adhesive layer 7/barrier layer (B) 6/adhesive layer 7/polyolefin resin layer (A) 51.

The polyolefin resin layer (A) containing a regrind material may be composed of only the regrind material, but preferably contains an acid-unmodified polyolefin resin. Inclusion of an acid-unmodified polyolefin resin (in particular, virgin acid-unmodified polyolefin resin) as described above can increase the proportion of the acid-unmodified polyolefin resin in the polyolefin resin layer (A).

In addition to the acid-modified polyolefin resin derived from the regrind material, it is preferable to further contain an acid-modified polyolefin resin (in particular, a virgin acid-modified polyolefin resin) that is not derived from the regrind material. With such a constitution, it is possible to more effectively suppress degradation in impact resistance while maintaining low transparency of the resulting multilayer body.

Further, in the first embodiment of the multilayer body, the polyolefin resin layer (A) preferably contains a polyamide resin having a difference in refractive index from the acid-unmodified polyolefin resin of less than 0.08 as described above. Such a constitution tends to more effectively suppress degradation in transparency of the resulting multilayer body.

The multilayer body of the first embodiment is produced through a step including, for example, melt-kneading a regrind material with a virgin acid-unmodified polyolefin resin to produce a polyolefin resin layer (A) containing the acid-unmodified polyolefin resin as a main component. The regrind material is preferably a regrind material generated at the time of producing the packaging material of the present embodiment described in detail later. The multilayer body of the first embodiment preferably further includes melt-kneading a virgin acid-modified polyolefin resin in addition to the regrind material and the virgin acid-unmodified polyolefin resin in producing the polyolefin resin layer (A).

The polyolefin resin layer (A) and the barrier layer (B) may be co-extruded, but it is preferable to produce respective films and bond the films to each other using an adhesive.

The adhesive layer 7 is a layer containing an adhesive. The adhesive preferably contains an acid-modified polyolefin. The acid-modified polyolefin is preferably an acid-modified polyolefin that is a polyolefin modified with an unsaturated carboxylic acid such as acrylic acid, methacrylic acid, maleic acid, or maleic anhydride, and a maleic anhydride-modified polyolefin is more preferable. An example of the acid-modified polyolefin is the acid-modified polyolefin resin contained in the above-described polyolefin resin layer (A).

The adhesive layer preferably contains the adhesive in an amount of 80 mass% or more, more preferably 90 mass% or more, still more preferably 95 mass% or more.

The adhesive layer may contain an additional component within a range that does not depart from the spirit of the present invention.

For details of the adhesive layer, reference can be made to the descriptions in paragraph [0015] of JP 2012-035504 A and paragraph [0043] of WO 2015/083558, the contents of which are incorporated herein by reference.

The thickness of the adhesive layer is preferably 1 µm or more, more preferably 2 µm or more, still more preferably 5 µm or more, and is preferably 200 µm or less, more preferably 100 µm or less.

The multilayer body of the first embodiment may further include an additional layers. Examples of the additional layer include an oxygen permeable layer, a sealant layer, and a metal deposited layer.

For the oxygen permeable layer, reference can be made to the descriptions in paragraphs [0011] to [0014] of WO 2015/083558, the contents of which are incorporated herein by reference.

For the sealant layer, reference can be made to the descriptions in paragraph [0045] of WO 2015/083558, the contents of which are incorporated herein by reference.

Examples of the metal deposited layer include an aluminum deposited layer. For details of the metal deposited layer, reference can be made to the descriptions in WO 2018/083962, the contents of which are incorporated herein by reference.

A second embodiment of the multilayer body is an embodiment further having a polyolefin resin layer (C) containing an acid-unmodified polyolefin resin as a main component, in addition to the polyolefin resin layer (A) containing a regrind material.

FIG. 3(b) is an example of the second embodiment of the multilayer body, in which the multilayer body further includes a polyolefin resin layer (C) containing an acid-unmodified polyolefin resin as a main component. For example, the multilayer body includes the polyolefin resin layer (C) containing an acid-unmodified polyolefin resin as a main component, and is obtained by laminating the polyolefin resin layer (C), the polyolefin resin layer (A), and the barrier layer (B) in this order.

More specifically, a multilayer body in which polyolefin resin layer (C) 50/polyolefin resin layer (A) 51/adhesive layer 7/barrier layer (B) 6/adhesive layer 7/polyolefin resin layer (A) 51/polyolefin resin layer (C) 50 are laminated in this order is exemplified.

The polyolefin resin layer (C) is a polyolefin resin layer containing an acid-unmodified polyolefin resin as a main component. The content of the acid-unmodified polyolefin resin in the polyolefin resin layer (C) is preferably 70 mass% or more, more preferably 80 mass% or more, still more preferably 85 mass% or more, further preferably 90 mass% or more, still further preferably 95 mass% or more, with respect to 100 mass% of the polyolefin resin layer (C). When it is equal to or more than the lower limit value, degradation of transparency tends to be further effectively suppressed. The upper limit value of the content of the acid-unmodified polyolefin resin in the polyolefin resin layer (A) is 100 mass% or less.

The type of the polyolefin resin contained in the polyolefin resin layer (C), the additional component, and the like are the same as those in the polyolefin resin layer (A). The polyolefin resin contained in the polyolefin resin layer (C) is preferably a virgin polyolefin resin.

That is, in the second embodiment of the multilayer body, the polyolefin resin layer (C) contains a virgin polyolefin resin (preferably, an acid-unmodified virgin polyolefin resin), the content of the xylylenediamine-based polyamide resin is less than 1 mass% (preferably less than 0.1 mass%) in the polyolefin resin layer (C), and the polyolefin resin layer (A) contains a regrind material. The proportion of the regrind material in the polyolefin resin layer (A) is preferably 1 mass% or more, more preferably 10 mass% or more, and is preferably 40 mass% or less, more preferably 35 mass% or less.

Also in the second embodiment of the multilayer body, the polyolefin resin layer (A) containing a regrind material may be composed only of the regrind material, but preferably the polyolefin resin layer (A) further contains an acid-unmodified polyolefin resin. Inclusion of an acid-unmodified polyolefin resin (in particular, virgin acid-unmodified polyolefin resin) as described above can increase the proportion of the acid-unmodified polypropylene resin in the polyolefin resin layer (A).

Also in the second embodiment of the multilayer body, in addition to the acid-modified polyolefin resin derived from the regrind material, it is preferable to further contain an acid-modified polyolefin resin (in particular, a virgin acid-modified polyolefin resin) that is not derived from the regrind material. With such a constitution, it is possible to more effectively suppress degradation in impact resistance while maintaining low transparency of the resulting multilayer body.

Further, in the second embodiment of the multilayer body as well, the polyolefin resin layer (A) preferably contains a polyamide resin having a difference in refractive index from the acid-unmodified polyolefin resin of less than 0.08 as described above. Such a constitution tends to more effectively suppress degradation in transparency of the resulting multilayer body.

In addition to the polyolefin resin layer (A), the polyolefin resin layer (C), and the barrier layer (B), the multilayer body of the second embodiment may include additional layers such as an adhesive layer, an oxygen permeable layer, a sealant layer, and a metal deposited layer. For details of these layers, reference can be made to the descriptions in the section of the multilayer body of the first embodiment.

### Packaging Material and Packaging Container

A packaging material of the present embodiment includes the multilayer body of the present embodiment. Inclusion of the multilayer body of the present embodiment can obtain a packaging material having excellent barrier properties. One embodiment of the packaging material is a packaging container.

The thickness ratio between the polyolefin resin layer (A) and the barrier layer (B) in the multilayer body of the present embodiment is not particularly limited, but when the thickness of one layer of the polyolefin resin layer (A) is 100, the thickness of one layer of the barrier layer (B) is preferably from 0.5 to 40, more preferably from 1 to 30. When the multilayer container of the present embodiment has a layer constitution of polyolefin resin layer (A)/barrier layer (B)/polyolefin resin layer (A), the thickness of the barrier layer (B) when the total thickness of the polyolefin resin layer (A) is 100 is preferably from 1 to 20, more preferably from 2 to 15.

The thickness of the polyolefin resin layer (A) is preferably 0.2 mm or more, more preferably 0.3 mm or more, and preferably 1.4 mm or less, and more preferably 1.0 mm or less per layer.

The thickness of the barrier layer (B) is preferably 10 µm or more, more preferably 20 µm or more, and preferably 150 µm or less, more preferably 100 µm or less, still more preferably 90 µm or less per layer.

Further, the thickness of the multilayer body or the multilayer container is preferably 0.4 mm or more, more preferably 0.7 mm or more, and preferably 3 mm or less, more preferably 2 mm or less.

The multilayer container of the present embodiment may be formed through injection molding, two-color molding, or biaxial stretching blow molding, but it is preferable to mold the multilayer body and then mold the multilayer body into the shape of a container. Specifically, it is preferable to soften the multilayer body of the present embodiment (in particular, the multilayer body as illustrated in FIG. 3) with heat and performing press molding on the multilayer body. After press molding, portions other than the multilayer container (end material) can be reused as the regrind material.

### Application

The packaging material or the packaging container of the present embodiment can be preferably used as lid materials for containers, bottles, cups, trays, tubes, and the like.

The packaging material or the packaging container of the present embodiment is preferably used for packaging and storing medicine, food products (processed seafood products, processed livestock products, rice, liquid food products), and the like. For details thereof, reference can be made to the descriptions in paragraphs [0033] to [0035] of JP 2011-37199 A, the contents of which are incorporated herein by reference.

In particular, the multilayer container of the present embodiment is preferably used as a transparent container for pre-packaged food products or food products to be subjected to boiling before consumption.

### Examples

Hereinafter, the present invention will be described more specifically with reference to Examples. Materials, amounts used, proportions, processing details, processing procedures, and the like described in the following Examples can be appropriately changed as long as they do not depart from the spirit of the present invention. Thus, the scope of the present invention is not limited to the specific examples described below.

When it is difficult to obtain a measuring instrument or the like used in Examples due to discontinuation or the like, another instrument with equivalent performance can be used for the measurements.

### 1. Raw Material

### Acid-Unmodified Polyolefin Resin

PP: polypropylene resin, available from Prime Polymer Co., Ltd., E222, refractive index: 1.49, MFR 1.5 g/10 min measured under conditions of 230°C and 2.16 kgf in accordance with JIS K 7210-1: 2014, melting point: 145°C

### Barrier Resin

MX Nylon: available from MITSUBISHI GAS CHEMICAL COMPANY, INC., S6007, polyamide resin synthesized from meta-xylylenediamine and adipic acid, refractive index: 1.57, melting point: 237°C

### Polyamide Resin

PA6: polyamide 6, available from Ube Industries, Ltd., product number: 1024B, refractive index: 1.54
PA666: polyamide 666, available from DSM, product number: 2030FC, refractive index: 1.54
PA6IT: polyamide 6I/6T, available from EMS, product number: G21, refractive index: 1.59

### Acid-Modified Polyolefin Resin

The maleic anhydride-modified polypropylene resins presented in Table 1 set forth below were used.

**[Table 1]**

| | BYNEL 50E803 | MODIC P908 |
|---|---|---|
| Manufacturer | Available from Dow Inc. | Available from MITSUBISHI CHEMICAL CORPORATION |
| MFR (g/10 min) | 450 | 45 |
| Melting point (°C) | 136 | |

MFR mentioned above means a melt flow rate measured under conditions of 190°C and 2.16 kgf in accordance with JIS K 7210-1:2014.

### 2. Reference Example, Comparative Example 1, Examples 1 to 8 Production of Regrind Material

As presented in Table 2 or Table 3, an acid-unmodified polyolefin resin, and as necessary, a barrier resin, a polyamide resin, and an acid-modified polyolefin resin (each component is presented in parts by mass) were blended, and extruded and pelletized at 253°C with a twin-screw extruder.

### Production of Film

The pellets of the regrind material obtained as described above were used and extruded at 225°C and a roll temperature of 35°C with a uniaxial film forming machine, whereby a film (thickness 200 µm, 100 µm) of 100 mass% of the regrind material was produced.

In addition, a film (thickness: 200 µm) using 50 mass% of the pellets of the regrind material and 50 mass% of virgin PP (available from Prime Polymer Co., Ltd., E222), a film (thickness: 200 µm) using 30 mass% of the pellets of the regrind material and 70 mass% of virgin PP, and a film (thickness: 200 µm) using 10 mass% of the pellets of the regrind material and 90 mass% of virgin PP were produced under the same conditions as above.

### Impact Test Impact Value Retention Rate

The impact test impact value was measured for the films (thickness: 200 µm, 100 µm) of 100 mass% of the regrind material obtained as described above, and the retention rate (unit:%) was presented with the impact value of the reference example (film of 100 mass% of virgin PP) taken as 100%.

The impact test impact value was measured by using IFT-60 available from TOYO PRECISION PARTS, MFG, CO., LTD.

### Haze

The haze of each film (thickness: 200 µm) of 100 mass%, 50 mass%, 30 mass%, and 10 mass% of the regrind material obtained as described above was measured.

The haze was measured with COH 400 available from NIPPON DENSHOKU INDUSTRIES Co., Ltd.

**[Table 2]**

| | | Reference Example | Comparative Example 1 | Example 1 | Example 2 | Example 3 |
|---|---|---|---|---|---|---|
| Regrind material | PP | 100 | 95 | 90 | 90 | 87 |
| | MX Nylon | | 5 | 5 | 5 | 5 |
| | PA6 | | | | | |
| | PA666 | | | | | |
| | PA6IT | | | | | |
| | BYNEL 50E803 | | | 5 | | |
| | MODIC P908 | | | | 5 | 8 |
| Impact test impact value retention rate (%) | 200 µm | 100 | 40.6 | 95.4 | 79.2 | 92.9 |
| | 100 µm | 100 | 65.6 | 99.8 | 99.7 | 99.8 |
| HAZE (%) | Regrind 100% | 16.9 | 90.9 | 82.8 | 81.1 | 83.9 |
| | Regrind 50% | 16.7 | 77.6 | 68.2 | 62.4 | |
| | Regrind 30% | 16.6 | 65.6 | 60.8 | 55.9 | - |
| | Regrind 10% | 17.1 | 63.4 | 52.3 | 48.2 | |

**[Table 3]**

| | | Example 4 | Example 5 | Example 6 | Example 7 | Example 8 |
|---|---|---|---|---|---|---|
| Reg rind material | PP | 90 | 90 | 90 | 90 | 90 |
| | MX Nylon | 4.5 | 4 | 4.5 | 4 | 4 |
| | PA6 | 0.5 | 1 | | | |
| | PA666 | | | 0.5 | 1 | |
| | PA6IT | | | | | 1 |
| | BYNEL 50E803 | | | | | |
| | MODIC P908 | 5 | 5 | 5 | 5 | 5 |
| Impact test impact value retention rate (%) | 200 µm | 78.4 | - | 78.4 | 77 | 72.1 |
| | 100 µm | - | - | - | - | - |
| HAZE (%) | Regrind 100% | 78.3 | 73.2 | 71.5 | 70.8 | 85.1 |
| | Regrind 50% | 57.3 | 52.5 | 52.8 | 50.3 | |
| | Regrind 30% | 51.0 | 43.6 | 44.9 | 40.2 | 60.4 |
| | Regrind 10% | 42.1 | 34.2 | 36.8 | 32.4 | |

As is apparent from the above-described results, even when the polyolefin resin layer (A) contains a xylylenediamine-based polyamide resin, degradation of transparency was able to be effectively suppressed while high impact resistance was maintained by blending an acid-modified polyolefin resin (Examples 1 to 8).

In particular, degradation of transparency was able to be effectively suppressed by blending a polyamide resin having a difference in refractive index from the acid-unmodified polyolefin resin of less than 0.08 (comparison between Examples 4 to 7 and other Examples).

### Reference Signs List

1 Raw material
2 Container molded by processing raw material
3 Material after raw material is punched
4 Regrind material
5 Polyolefin resin layer
6 Barrier layer
7 Adhesive layer
50 Polyolefin resin layer (C)
51 Polyolefin resin layer (A)

## Claims

1. A multilayer body, comprising:
a polyolefin resin layer (A) containing an acid-unmodified polyolefin resin as a main component; and
a barrier layer (B) containing a barrier resin as a main component,
the polyolefin resin layer (A) containing from 0.1 to 8 mass% of a xylylenediamine-based polyamide resin and from 0.1 to 15 mass% of an acid-modified polyolefin resin,
wherein the xylylenediamine-based polyamide resin is a polyamide resin containing a diamine-derived structural unit and a dicarboxylic acid-derived structural unit, 70 mol% or more of the diamine-derived structural unit being derived from a xylylenediamine, and 70 mol% or more of the dicarboxylic acid-derived structural unit being derived from an α,ω-linear aliphatic dicarboxylic acid having from 4 to 20 carbon atoms.

2. The multilayer body according to claim 1, wherein the acid-unmodified polyolefin resin contained in the polyolefin resin layer (A) contains an acid-unmodified polypropylene resin.

3. The multilayer body according to claim 1 or 2, wherein the acid-modified polyolefin resin contained in the polyolefin resin layer (A) contains a maleic anhydride-modified polypropylene resin.

4. The multilayer body according to any one of claims 1 to 3, wherein the polyolefin resin layer (A) further contains a polyamide resin having a difference in refractive index from the acid-unmodified polyolefin resin of less than 0.08.

5. The multilayer body according to claim 4, wherein the polyamide resin having a difference in refractive index from the acid-unmodified polyolefin resin of less than 0.08 contains at least one selected from polyamide 6, polyamide 66, and polyamide 666.

6. The multilayer body according to any one of claims 1 to 5, wherein the xylylenediamine-based polyamide resin contained in the polyolefin resin layer (A) is a regrind material.

7. The multilayer body according to any one of claims 1 to 6, wherein
the barrier resin contained in the barrier layer (B) is a xylylenediamine-based polyamide resin, and
the xylylenediamine-based polyamide resin is a polyamide resin containing a diamine-derived structural unit and a dicarboxylic acid-derived structural unit, 70 mol% or more of the diamine-derived structural unit being derived from a xylylenediamine, and 70 mol% or more of the dicarboxylic acid-derived structural unit being derived from an α,ω-linear aliphatic dicarboxylic acid having from 4 to 20 carbon atoms.

8. The multilayer body according to any one of claims 1 to 7, wherein
the acid-unmodified polyolefin resin contained in the polyolefin resin layer (A) contains a maleic anhydride-modified polypropylene resin,
the polyolefin resin layer (A) further contains a polyamide resin having a difference in refractive index from the acid-unmodified polyolefin resin of less than 0.08,
the polyamide resin having a difference in refractive index from the acid-unmodified polyolefin resin of less than 0.08 contains at least one selected from polyamide 6, polyamide 66, and polyamide 666,
the xylylenediamine-based polyamide resin contained in the polyolefin resin layer (A) is a regrind material,
the barrier resin contained in the barrier layer (B) is a xylylenediamine-based polyamide resin, and
the xylylenediamine-based polyamide resin is a polyamide resin containing a diamine-derived structural unit and a dicarboxylic acid-derived structural unit, 70 mol% or more of the diamine-derived structural unit being derived from a xylylenediamine, and 70 mol% or more of the dicarboxylic acid-derived structural unit being derived from an α,ω-linear aliphatic dicarboxylic acid having from 4 to 20 carbon atoms.

9. The multilayer body according to any one of claims 1 to 8, further comprising a polyolefin resin layer (C) containing an acid-unmodified polyolefin resin as a main component,
wherein the polyolefin resin layer (C), the polyolefin resin layer (A), and the barrier layer (B) are laminated in this order.

10. A packaging material, comprising the multilayer body described in any one of claims 1 to 9.

11. The packaging material according to claim 10, which is for containers.

12. A method for producing the packaging material described in claim 10 or 11, the method comprising melt-kneading a regrind material generated in producing the packaging material described in claim 10 or 11 with a virgin acid-unmodified polyolefin resin to produce the polyolefin resin layer (A) containing the acid-unmodified polyolefin resin as a main component.

13. The method for producing the packaging material according to claim 12, wherein in producing the polyolefin resin layer (A), the method comprises the melt-kneading of a virgin acid-modified polyolefin resin in addition to the regrind material and the virgin acid-unmodified polyolefin resin.
